## Europäisches Patentamt

## European Patent Office

## Office européen des brevets

(19)

(11) Veröffentlichungsnummer: **0 112 960**
**B1**

(12)

# EUROPÄISCHE PATENTSCHRIFT

(45) Veröffentlichungstag der Patentschrift:
23.07.86

(51) Int. Cl.⁴: **F 16 D 3/50, F 16 D 13/68**

(21) Anmeldenummer: **83103977.1**

(22) Anmeldetag: **22.04.83**

(54) **Drehelastische Kupplung.**

(30) Priorität: **25.11.82 DE 3243640**

(43) Veröffentlichungstag der Anmeldung:
**11.07.84 Patentblatt 84/28**

(45) Bekanntmachung des Hinweises auf die Patenterteilung:
**23.07.86 Patentblatt 86/30**

(84) Benannte Vertragsstaaten:
**AT BE CH DE FR GB IT LI NL SE**

(56) Entgegenhaltungen:
**EP-A-0 090 075**
**FR-A-450 983**

(73) Patentinhaber: **WOCO Franz- Josef Wolf & Co.,
Sprudelallee 19, D-6483 Bad Soden- Salmünster
(DE)**

(72) Erfinder: **Wolf, Franz Josef, Sprudelallee 19, D-6483
Bad Soden- Salmünster (DE)**
Erfinder: **Pletsch, Hubert, Am Quellenrain 13,
D-6483 Bad Soden- Salmünster (DE)**
Erfinder: **Benneyan, Gregoire, Huttenheegstrasse
2, D-6483 Bad Soden- Salmünster (DE)**

(74) Vertreter: **Jaeger, Klaus, Dr., JAEGER &
PARTNER Patentanwälte Bergstrasse 48 1/2,
D-8035 München- Gauting (DE)**

## Beschreibung

Die Erfindung betrifft eine drehelastische Kupplung, bei der zwei gegeneinander verdrehbare Kupplungshälften über mindestens ein federndes Zwischenglied und, unter Bezug auf den Kraftleitungsweg durch die Kupplung, in Serie zu diesem federnden Zwischenglied über mindestens ein eine Rotation in eine Translation oder umgekehrt, eine Translation in eine Rotation umsetzendes bewegungsumsetzendes Zwischenglied kraftleitend miteinander verbunden sind, und bei der mindestens ein Auflagerblech vorgesehen ist, das radial außen auf mindestens einem radial innen kraftschlüssig abgestützt mit einer ersten der beiden Kupplungshälften verbundenen federnden Zwischenglied aufliegt und an dem das bewegungsumsetzende Zwischenglied direkt oder über mindestens ein Koppelglied translatorisch in der Weise angelenkt ist, daß das Auflagerblech bei einer auf die erste Kupplungshälfte bezogenen Relativdrehung der anderen Kupplungshälfte, die rotatorisch fest mit dem bewegungsumsetzenden Zwischenglied verbunden ist, zumindest im wesentlichen radial, das federnde Zwischenglied spannend oder entspannend, beaufschlagt wird.

Eine Kupplung dieser Art ist aus der französischen Patentschrift FR-A-450 983 bekannt. In Federtöpfen, die an einer äußeren von zwei zueinander konzentrischen Kupplungshälften aufgehängt sind, ist eine Schraubenfeder gehaltert und abgestützt, die über den Kopf einer Kurbelstange nach radial innen spannbar ist, die ihrerseits am Kurbelzapfen einer Kurbelscheibe angelenkt ist, die drehfest mit der inneren Kupplungshälfte verbunden ist. Nachteilig bei dieser Ausbildung der Kupplung sind der erforderliche relativ große Baudurchmesser der Kupplung, der nur begrenzte nutzbare abgefederte Drehwinkel und die hohe Beanspruchung der Kurbelzapfen.

Weiterhin ist in der nicht vorveröffentlichten EP-A-90075 eine drehelastische Kupplung beschrieben, deren federnde Zwischenglieder, insbesondere Gummifedern mit und ohne einvulkanisierten Zwischenblechen zur Querdehnungsbehinderung, und das bewegungsumsetzende Zwischenglied, ein Exzenter, der über ein Exzenterlager direkt an den federnden Zwischengliedern angreift und diese bei positiver Beaufschlagung nach radial auswärts gerichtet komprimierend elastisch verformt, in Reihe zwischen die beiden Kupplungshälften geschaltet sind.

Insbesondere bei der Realisierung der federnden Zwischenglieder in Form von Gummifedern zeigt diese Kupplung im Bereich hoher Drehzahlen aufgrund der auftretenden Zentriefugalkräfte eine oft unerwünscht zunehmende Progression der Federkennlinie. Die ohnehin vorhandene Versteifung der Federkennlinie einer Gummifeder bei zunehmender Druckbelastung wird also durch die Zentrifugalkraft gleichsinnig verstärkt, so daß Drehlastwechsel bei hohen Drehzahlen nicht immer ausreichend abgefedert werden.

Der Erfindung liegt die Aufgabe zugrunde, eine Kupplung der eingangs genannten Art zu schaffen, die bei Verdrehwinkeln von weit über 30° bei Auslegung für eine vorgegebene Nennleistung mit nur geringem Baudurchmesser auskommt, verschleißfest ist und keine hoch belasteten Kurbeltrieblager erfordert; dem soll die Kupplung bis zu relativ großen Drehwinkeln, auch bei großer und sehrgroßer Drehzahl der Kupplung eine weiche Kennlinie ohne eine zunehmend zu kleineren Drehwinkeln verschoben einsetzende Progression aufweisen.

Die Erfindung löst diese Aufgabe für eine drehelastische Kupplung der eingangs beschriebenen Art dadurch, daß das bewegungsumsetzende Zwischenglied eine Exzenterscheibe ist und mindestens eines der Koppelglieder eine starre Pleuelstange ist.

Dadurch, daß das Pleuelauge die Exzenterscheibe umgreifend umschließt, ist bei gleicher Belastung der Kupplungen die auf das einzelne Flächenelement einwirkende Kraft bei der Anlenkung gemäß der Erfindung wesentlich geringer als bei der Kurbelzapfenanlenkung nach dem Stand der Technik. Dabei ermöglicht zudem die zentrale Anlenkung der als Koppelglied dienenden Pleuelstange eine signifikante Verminderung des für die Kupplung erforderlichen Durchmessers.

Die Exzenterscheibe kann direkt, beispielsweise über ein angeformtes Lagerauge, oder indirekt, über ein Koppelglied, kraftleitend an dem Auflagerblech angelenkt sein. Vorzugsweise erfolgt die Anlenkung über ein Koppelglied, um die den direkten Kurbeltrieben und Exzentertrieben eigenen geringen Scherkomponenten vollkommen auszuschalten. Als Koppelglieder zur Ankopplung, das heißt kraftleitenden Verbindung zwischen dem translatorischen Ausgang des bewegungsumsetzenden Zwischengliedes und dem Auflagerblech, können je nach Aufgabenstellung, die die Kupplung erfüllen soll, prinzipiell beliebige an sich bekannte Kopplungsglieder verwendet werden. Mindestens eines der Koppelglieder kann formstabil starr sein, also eine Pleuelstange oder eine Koppelschwinge, oder kann zugelastisch mit vorzugsweise durch Formschluß begrenzter elastischer Dehnbarkeit ausgebildet sein. Als Koppelglieder im Rahmen der Erfindung einsetzbare vorzugsweise begrenzt zugelastische Zugglieder können beispielsweise in Form einer Gummilasche mit nicht gestreckt einvulkanisierter Kette oder nicht gestreckt einvulkanisiertem Seil oder aus einem in diesem Sinne unbewehrtem Elastomer bestehende Koppelglieder sein, wobei in dem zuletzt genannten Fall der Federweg durch Anschläge begrenzt ist, die komplementär an den Teilen ausgebildet sind, zwischen die das an und für sich unbegrenzt elastische Koppelglied eingeschaltet ist. Dabei wird die zuletzt genannte Art der zugelastischen Kopplung vorzugsweise in Serie mit einem starren Koppelglied, dem Pleuel, verwendet. Ein Beispiel für eine solche Serienschaltung ist nach einer Ausgestaltung der Erfindung eine starre Pleuelstange, deren Fuß oder unteres Auge bezüglich der Drehachse starr an dem bewegungsumsetzenden Zwischenglied angelenkt ist und deren Kopf in einem elastischen Lager mit translatorisch verschiebbarer Drehachse am Auflagerblech angelenkt ist. Dabei kann die elastische Auslenkbarkeit der Lagerachse durch formschlüssige Anschläge, beispielsweise zwischen der Lagerschale und dem Pleuelkopf oder der Lagerschale und einem Pleuelbolzen, begrenzt sein. Dabei bewirkt eine solche Anordnung in ersichtlicher Weise die für die herkömmlichen Kupplungsscheiben typische Vordämpfung im Winkelbereich von beispielsweise bis zu 2° oder 3°, bezogen auf den Verdrehwinkel 0°, also bezogen auf die Nullage der beiden Kupplungshälften relativ zueinander.

Während eine möglichst weiche und möglichst linear verlaufende Federkennlinie für die meisten Anwendungsfälle bis zu möglichst großen Drehwinkeln benötigt und gewünscht wird, ist es für die meisten dieser Einsatzbereiche zumindest nicht erforderlich, meist nicht einmal erwünscht, daß eine solche weiche Kennlinie bereits aus der Nullage heraus oder unmittelbar anschließend an die Vordämpfung schon bei kleinsten in die Kupplung eingeleiteten Arbeitsbeträgen einsetzt. Insbesondere im Kraftfahrzeugbau entspricht eine drehelastische Kupplung den Anforderungen der Konstrukteure, die, möglichst nach Vordämpfung, zunächst bis in den relevanten Nutzlastbereich hinein eine ausgesprochen steile Federkennlinie aufweist, dann im eigentlichen Arbeitsbereich durch eine möglichst flache weiche und möglichst lineare Federkennlinie gekennzeichnet ist, bei der mit zunehmender Arbeitsbeaufschlagung der Kupplung und mit zunehmender Drehzahl die Progression erst bei möglichst großen Verdrehwinkeln einsetzt. Diese Vorprogression, das heißt, der stark progressive Verlauf der Federkennlinie zwischen der Nullage bzw. der Vordämpfung und dem eigentlichen Nutz- und Arbeitsbereich der Kupplung, kann bei der Kupplung gemäß der Erfindung nach einer weiteren Ausgestaltung in einfacher Weise dadurch herbeigeführt werden, daß die federnden Zwischenglieder, das heißt also die Stahlfedern oder die Gummifedern, die hydraulischen oder pneumatischen Federn, zwischen dem Auflagerblech und der Abstützung an einer der beiden Kupplungshälften unter Kompressionsvorspannung eingespannt sind.

Ein weiterer Vorteil, der bei der Kupplung gemäß der Erfindung durch das Einschalten des Auflagerblechs und die zumindest im wesentlichen radial einwärts wirkende Federkompression erzielbar ist, liegt darin, daß bei vorgegebenem Durchmesser der Kupplung in Richtung der Belastung der federnden Zwischenglieder wesentlich größere Bauhöhen der federnden Zwischenglieder konstruktiv untergebracht werden können, als dies bei einer zumindest im wesentlichen nach radial auswärts gerichteten Wirkungsweise des bewegungsumsetzenden Zwischengliedes oder bei Ausbildung des bewegungsumsetzenden Zwischengliedes als Kurbeltrieb möglich ist. Durch eine solche größere Bauhöhe der Feder kann jedoch wiederum in angestrebter Weise der weiche lineare Verlauf, also der optimal nutzbare Verlauf der Federkennlinie der drehelastischen Kupplung, verlängert werden.

Beim Einleiten einer Arbeit in eine der Kupplungshälften, beispielsweise in die Kupplungshälfte, an der die federnden Zwischenglieder kraftschlüssig und drehfest gehaltert und abgestützt sind, verläuft der Weg der Kraftleitung von der Eingangswelle der Kupplung in die erste Kupplungshälfte, von dort über das Abstützlager in das federnde Zwischenglied, von dort auf das Auflagerblech, von diesem in das Koppelglied, gegebenenfalls mehrere in Serie hintereinandergeschaltete Koppelglieder, von dort translatorisch in das bewegungsumsetzende Zwischenglied und aus diesem rotatorisch über die drehfest verbundene zweite Kupplungshälfte in die Ausgangswelle der Kupplung. Dabei wird die an der Eingangswelle eingeleitete Arbeit so lange vom federnden Zwischenglied speichernd aufgenommen, bis das Drehmomentengleichgewicht hergestellt ist, das heißt, bis die eingeleitete Arbeit dem Betrag nach gleich der Summe der gespeicherten Federverformungsarbeit in dem federnden Zwischenglied der Kupplung und dem Lastdrehmoment an der Ausgangswelle der Kupplung ist.

Vorstehend ist der Kraftleitungsweg durch die Kupplung der Erfindung von der einen zur anderen Kupplungshälfte über ein federndes Zwischenglied, ein Auflagerblech, ein Koppelglied und ein bewegungsumsetzendes Zwischenglied beschrieben. Eine solche Auslegung der Kupplung der Erfindung ist zur Übertragung kleiner Arbeitsgrößen oder als Billigkupplung ohne weiteres funktionsfähig. Zur Übertragung größerer Leistungen und bei höheren Anforderungen an die Haltbarkeit und Zuverlässigkeit solcher Kupplungen, beispielsweise im Kraftfahrzeugbau, werden jedoch vorzugsweise mehrere dieser Kraftleitungswege in Parallelschaltung zueinander angeordnet. Dies bedeutet, daß die gesamte von der Eingangshälfte zur Ausgangshälfte der Kupplung zu übertragende Arbeit auf zwei, drei, vier, oder mehr zueinander parallele Kraftleitungswege aufgeteilt wird, die dann auf der Ausgangshälfte der Kupplung wiedervereint werden. Vorzugsweise erfolgt die Aufteilung auf insbesonders zwei, drei, vier oder fünf solcher paralleler Kraftleitungswege. Bei der Ausgestaltung der Kupplung mit zwei parallelen Kraftleitungswegen sind die federnden Zwischenglieder vorzugsweise Federfuß gegen Federfuß abgestützt, so daß die Widerlager selbst relativ schwach bemessen werden können. Bei mehr als zwei parallelen Kraftleitungswegen sind die Fußbereiche der federnden Zwischenglieder vorzugsweise jeweils an ihren Kanten unter Bildung einer geschlossenen Wirkungslinie symmetrisch verteilt untereinander abgestützt, beispielsweise also bei drei parallelen Kraftleitungswegen an den Ecken eines gleichseitigen Dreiecks, bei vier parallelen Kraftleitungswegen an den Ecken eines Quadrats und bei fünf parallelen Kraftleitungswegen an den Ecken eines gleichseitigen regelmäßigen Fünfecks.

Die Erfindung ist im folgenden anhand von Ausführungsbeispielen in Verbindung mit den Zeichnungen näher erläutert. Es zeigen:

Fig. 1 ein erstes Ausführungsbeispiel der Erfindung in axialer Draufsicht, teils radial geschnitten;

Fig. 2 einen Schnitt nach II-II in Fig. 1;

Fig. 3 in einer der Fig. 2 entsprechenden Darstellung ein gegenüber dem dort gezeigten Ausführungsbeispiel durch Vordämpfung modifiziertes Ausführungsbeispiel der drehelastischen Kupplung; und

Fig. 4 die Federkennlinie des in Fig. 3 gezeigten Ausführungsbeispiels der drehelastischen Kupplung.

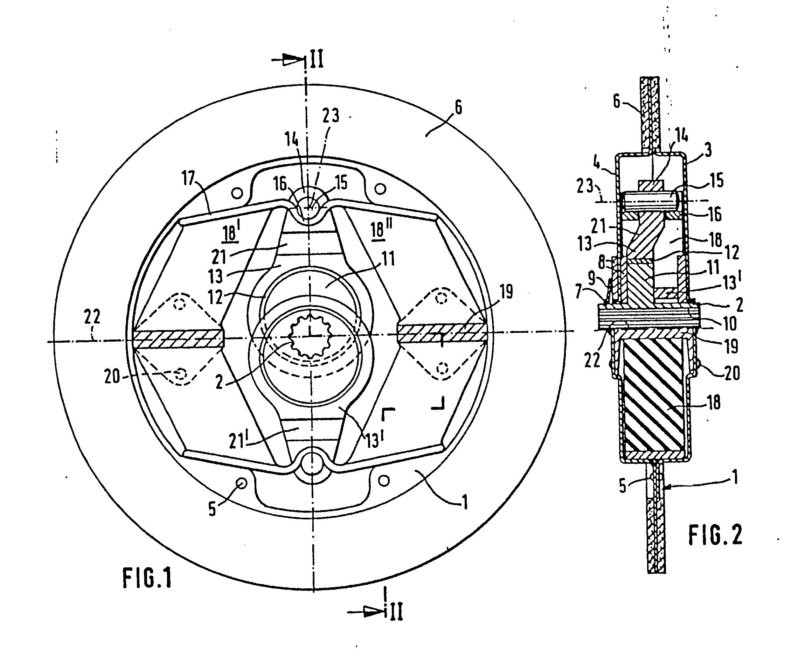

Als erstes Ausführungsbeispiel der Erfindung ist in der Fig. 1 in axialer Seitensicht eine drehelastische Kupplung in der Ausbildung als drehelastische Kupplungsscheibe für eine Membranfedertrennkupplung zwischen Motor und Getriebe eines Kraftfahrzeugs gezeigt. Dieses in Fig. 1 gezeigte Ausführungsbeispiel ist in der Fig. 2 als Schnitt nach II-II in Fig. 1 dargestellt.

Die im folgenden kurz als "Kupplung" bezeichnete drehelastische Trennkupplungsscheibe der Figuren 1 und 2 besteht aus einer ersten Kupplungshälfte 1 und einer zweiten Kupplungshälfte 2, die über Zwischenglieder drehelastisch kraftleitend miteinander verbunden sind. Die beiden Kupplungshälften 1, 2 sind koaxial und zumindest im wesentlichen auch koplanar zueinander angeordnet, und zwar in der Weise, daß die zweite Kupplungshälfte innenliegend von der ersten Kupplungshälfte außenliegend umschlossen wird.

Die erste oder äußere Kupplungshälfte 1 besteht aus einem auf einer Seite angeordneten Zentrier- und Abdeckblech 3 und auf der gegenüberliegenden axialen Seite aus einem ebenfalls zentrierenden und abdeckenden Belagträgerblech 4, die peripher durch Nieten 5 oder durch Schrauben, Schweißen oder in anderer Weise fest miteinander verbunden sind. Das Belagträgerblech 4 trägt an seinem Außenrand in üblicher Weise Reibbelagscheiben 6. Im Gegensatz zu den üblichen Trennkupplungsscheiben dieser Art ist durch die hohe Drehelastizität der Kupplung gemäß der Erfindung keine Belagfeder zwischen dem Belagträgerblech 4 und den Reibbelagscheiben 6 erforderlich.

Das Zentrierblech 3 und das Belagträgerblech 4 sind beide drehbar auf der als Nabe der Kupplung ausgebildeten inneren Kupplungshälfte 2 axial fixiert. Diese Fixierung erfolgt auf jeder Seite durch einen Sprengring 7, der in eine in der Nabe 2 ausgebildete Ringnut eingreift. In der in Fig. 2 auf der linken Seite gezeigten Weise kann diese Fixierung zusätzlich unter Zuordnung einer schwimmenden Beilagscheibe 8 und gegebenenfalls einer Reibscheibe 9 erfolgen. Selbstverständlich kann auch das Zentrierblech 3 in gleicher Weise fixiert sein.

Die zweite Kupplungshälfte ist als Nabe 2 der Kupplung ausgebildet und in üblicher Weise mit einer Innenverzahnung 10 versehen, auf der sie auf einer in den Figuren nicht dargestellten Kupplungsausgangswelle, hier also der Antriebswelle des nachgeschalteten Getriebes, drehfest fixierbar ist.

In dem hier beschriebenen Ausführungsbeispiel der Kupplung erfolgt die drehelastische Verbindung der beiden Kupplungshälften 1,2 miteinander über zwei zueinander parallele Kraftleitungswege, die symmetrisch zueinander ausgeblildet sind. Aus Gründen der übersichtlicheren Darstellung ist daher im Folgenden nur einer der beiden Kraftleitungswege im Einzelnen erläutert.

Drehfest mit der zweiten Kupplungshälfte, in diesem Falle einstückig, ist eine Exzenterscheibe 11 verbunden, auf der über ein Lager 12 das untere Pleuelauge eines Pleuels 13 gelagert ist. Der Pleuelkopf 14 ist über einen Pleuelbolzen 15 mittig in einem Auflager 16 eines Auflagerblechs 17 angelenkt. Das Auflagerblech liegt anvulkanisiert auf zwei zueinander symmetrischen Gummifederpaketen 18', 18'' auf, die gemeinsam als Gummifeder 18 das federnde Zwischenglied der drehelastischen Kupplung bilden. Die Gummifeder 18 ist auf einem Steg 19 abgestützt, der über Nieten 20 oder in anderer Weise, beispielsweise durch Verschrauben oder Verschweißen, fest mit dem Zentrierblech 3 und dem Belagträgerblech 4, also fest mit der ersten Kupplungshälfte 1, verbunden ist. Die Gummifeder 18 ist unter Kompressionsvorspannung zwischen dem Auflagerblech 17 und dem Steg 19 eingespannt.

Vorstehend ist der Kraftleitungsweg, bezogen auf die Darstellungen der Figuren 1 und 2, durch den oberen Teil der Kupplung beschrieben. Der durch den unteren Teil der Kupplung parallel verlaufende Kraftleitungsweg ist dem vorstehend beschriebenen Kraftleitungsweg durch den oberen Teil der Kupplung vollkommen symmetrisch gleich. Dabei dient eine Abkröpfung 21 im Pleuel 13 und eine entsprechende Abkröpfung 21' im unteren Pleuel 13' dem Massenausgleich in der auch für höhere Drehzahlen bestimmten Kupplung.

Bei einer Relativverdrehung der ersten Kupplungshälfte 1 gegenüber der zweiten Kupplungshälfte 2 wird der Exzenter 11 aus der in den Figuren 1 und 2 gezeigten Nullage herausgedreht, und zwar je nach Drehrichtung der zweiten Kupplungshälfte 2 nach rechts oder nach links. In beiden Fällen führt dies zu einer Verkürzung des radialen Abstandes zwischen der Mittellinie 22 der zweiten Kupplungshälfte und der Mittellinie 23 des Pleuelbolzens 15. Dadurch wird in der Darstellung der Figuren 1 und 2 das Auflagerblech 17 abwärts gegen die Rückstellkraft der vorgespannten Gummifeder 18 gezwungen, die unter speichernder Aufnahme der eingeleiteten Arbeit weiter komprimiert wird. Dabei wird die in die Gummifeder eingeleitete Verformungsarbeit von der Gummifeder solange speichernd aufgenommen, bis sich die an den beiden Kupplungshäften wirksamen Drehmomente im Gleichgewicht befinden. Mit anderen Worten, bis zum Eintritt des dynamischen Momentengleichgewichts zwischen Eingangshälfte und Ausgangshälfte der Kupplung wird das an der Ausgangshälfte der Kupplung auftretende Trägheitsmoment durch Umsetzen der in die Eingangshälfte der Kupplung eingeleitete Arbeit in eine elastische Verformungsarbeit der Gummifeder 18 gespeichert. Dabei ist es in erkennbarer Weise gleichgültig, ob die äußere Kupplungshälfte 1 oder die innere Kupplungshälfte 2 die Eingangshälfte oder die Ausgangshälfte der Kupplung ist. Die Funktion der Kupplung ist in beiden Fällen identisch. Ausschlaggebend ist lediglich der relative Verdrehwinkel der beiden Kupplungshälften 1, 2 gegeneinander.

Durch die relativ große Bauhöhe der Gummifeder 18, die fast gleich dem Radius der Kupplung ist, können mit der in den Figuren 1 und 2 gezeigten Kupplung bei vergleichsweise kleinem Durchmesser der Kupplung relativ große Momente elastisch übertragen werden.

Ein weiterer Effekt, der bei der in den Figuren 1 und 2 gezeigten Kupplung besonders ausgeprägt auftritt, ist der, daß durch die bei hohen Drehzahlen auftretenden Zentrifugalkräfte die Gummifeder 18, das Auflagerblech 17 und auch der Pleuelbolzen 15 und der pleuel 13 selbst signifikant nach radial außen beaufschlagt werden. Dies bewirkt in der Tendenz eine Entspannung der Gummifeder 18, wirkt also einer Progression der Federkennlinie der drehelastischen Kupplung in erheblichem Ausmaß entgegen.

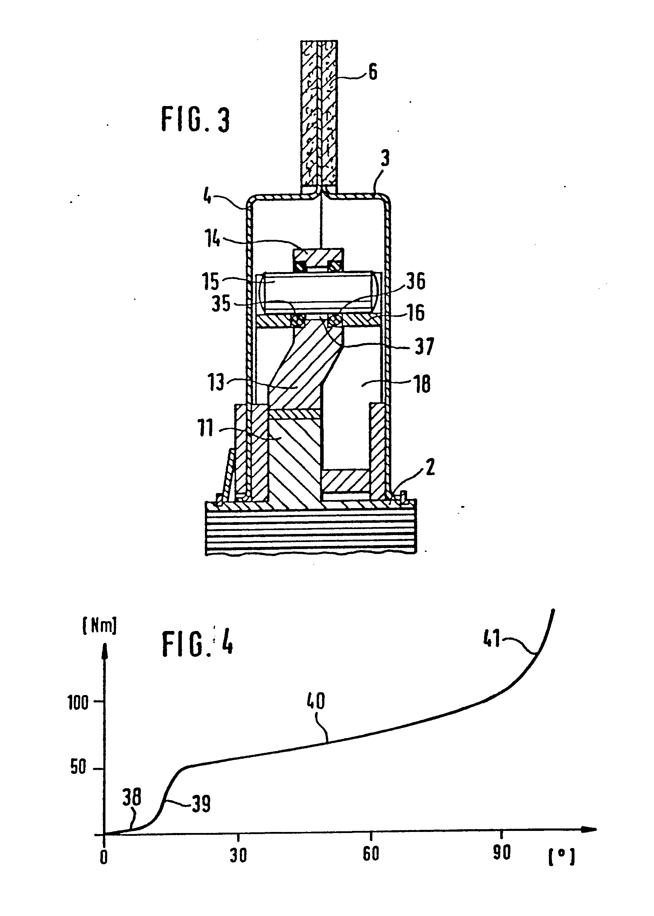

Eine Möglichkeit, die im Kraftfahrzeugbau übliche Vordämpfung herbeizuführen, ist in der Fig. 3 gezeigt. Die in Fig.3 gezeigte Kupplung entspricht im wesentlichen der in Fig. 2 gezeigten Kupplung und unterscheidet sich von dieser dadurch, daß der Pleuelbolzen l5 nicht wie in der Fig. 2 den Pleuelkopf 14 mit dem Auflager 16 in Wirkrichtung formschlüssig verbindet, sondern über elastische Gummiringe 35, 36 im Pleuelkopfauge 37 gelagert ist. Dabei ist der freie Innendurchmesser des Pleuelauges 37 deutlich größer als der Außendurchmesser des Pleuelbolzens 15.

Tritt jetzt ein in der Darstellung der Fig. 3 abwärts gerichteter Zug am Pleuel 13 auf, so wird dieser zunächst noch nicht als Kompressionsarbeit in die Gummifeder 18 eingeleitet, sondern als Kompressionsverformungsarbeit von den Gummiringen 35 und 36 aufgenommen. Dies erfolgt dabei solange, bis das Pleuelauge 37 mit seinem oberen Scheitel unmittelbar formschlüssig auf dem oberen Scheitel des Pleuelbolzens 15 aufliegt oder die zu einer weiteren Kompressionsverformung der Gummiringe 35, 36 erforderliche Verformungsarbeit gleich oder größer als die zum Verformen der vorgespannten Gummifeder 18 erforderliche Verformungsarbeit ist.

Die mit der in Fig. 3 dargestellten Kupplung erhaltene Federkennlinie ist in der Fig. 4 wiedergegeben. Bei Beginn der Verdrehung der beiden Kupplungshälften 1, 2 gegeneinander aus der Nullage heraus durchläuft die Kennlinie zunächst den durch die Gummiringe 35, 36 erzeugten Vordämpfungsbereich 38. Dieser durch einen besonders flachen Verlauf der Kennlinie gekennzeichnete Vordämpfungsbereich 38 erstreckt sich üblicherweise über einen Verdrehwinkelbereich von ungefähr 3° bis 5° und ist der deutlicheren Darstellung halber in der Fig. 4 etwas vergrößert dargestellt. Beim Eintritt des Formschlusses zwischen dem Pleuelkopf 14 bzw. dem Scheitel des Pleuelauges 37 und dem Pleuelbolzen 15 wird dann die über den Pleuel 13 in die Gummifeder 18 eingeleitete Arbeit vollständig, direkt und verlustfrei in diese Gummifeder 18 eingeleitet. Durch die Kompressionsvorspannung der Gummifeder 18 durchläuft dabei die Federkennlinie einen zunächst steilen Vorprogressionsbereich 39. Dieser Vorprogressionsbereich 39 dient dem Zweck, den für den Kraftfahrzeugbau hinsichtlich der Drehmomentendämpfung relativ uninteressanten Bereich der niedrigen Drehmomente möglichst rasch mit einem möglichst geringen Verdrehwinkel zu überspringen. Der Verlauf der Federkennlinie in diesem Vorprogressionsbereich 39 wird dabei wesentlich von dem Grad der Vorkompression oder Vorspannung bestimmt, mit dem die Gummifeder 18 bei Nullstellung der Kupplung, also bei einem Verdrehwinkel von 0° zwischen den beiden Kupplungshälften, zwischen dem Auflagerblech 17 und dem abstützenden Steg 19 eingespannt ist. In dem in Fig. 4 dargestellten Kennliniendiagramm ist die Vorspannung der Gummifeder 18 beispielsweise so gewählt, daß der Drehmomentenbereich von kleiner als 50 Nm praktisch aus der Federkennlinie der drehelastischen Kupplung "herausgefiltert" wird.

An diesen Vorprogressionsbereich 39 schließt sich dann der eigentliche Arbeitsbereich 40 an, der sich bei dem in der Fig. 4 gezeigten Ausführungsbeispiel über einen Arbeitsbereich oder Drehmomentenbereich von ungefähr 50 bis 100 Nm über einen Verdrehwinkelbereich von rund 80°, nämlich von rund 10° bis rund 90°, fast linear mit weicher Kennung erstreckt. Erst bei wirksamen Drehmomenten von größer als 100 Nm bei einem Verdrehwinkel von größer als 90° setzt dann der Progressionsbereich 41 der Federkennlinie der drehelastischen Kupplung ein. Dabei wird durch die erfindungswesentlichen Merkmale der Kupplung erreicht, daß der Verlauf des Arbeitsbereiches 40 der Federkennlinie der drehelastischen Kupplung fast drehzahlunabhängig ist und bei sehr hohen Drehzahlen eher in durchaus angestrebter und erwünschter Weise flacher verläuft und zu größeren Verdrehwinkeln hin ausgedehnt wird. Dies bewirkt und gewährleistet eine zuverlässig weiche Abfederung auch größerer Drehmomentlastwechselstöße selbst bei hohen übertragenen Drehmomenten und hohen Drehzahlen.

## Patentansprüche

1. Drehelastische Kupplung, bei der zwei gegeneinander verdrehbare Kupplungshälften (1, 2) über mindestens ein federndes Zwischenglied (18) und, unter Bezug auf den Kraftleitungsweg durch die Kupplung, in Serie zu diesem federnden Zwischenglied über mindestens ein eine Rotation in eine Translation oder umgekehrt, eine Translation in eine Rotation umsetzendes bewegungsumsetzendes Zwischenglied (11) kraftleitend miteinander verbunden sind, und bei der mindestens ein Auflagerblech (17) vorgesehen ist, das radial außen auf mindestens einem radial innen kraftschlüssig abgestützt mit einer ersten der beiden Kupplungshälften (1) verbundenen federnden Zwischenglied (18) aufliegt und an dem das bewegungsumsetzende Zwischenglied (11) direkt oder über mindestens ein Koppelglied (13) translatorisch in der Weise angelenkt ist, daß das Auflagerblech (17) bei einer auf die erste Kupplungshälfte bezogenen Relativverdrehung der anderen Kupplungshälfte, die rotatorisch fest mit dem bewegungsumsetzenden Zwischenglied (11) verbunden ist, zumindest im wesentlichen radial, das federnde Zwischenglied (18) spannend oder entspannend, beaufschlagt wird,
dadurch gekennzeichnet,
daß das bewegungsumsetzende Zwischenglied eine Exzenterscheibe (11) ist und mindestens eines der Koppelglieder eine starre Pleuelstange (13) ist.

2. Drehelastische Kupplung nach Anspruch 1,
dadurch gekennzeichnet,
daß mindestens eines der Koppelglieder (35, 36) elastisch ist.

3. Drehelastische Kupplung nach Anspruch 2,
dadurch gekennzeichnet,
daß der Federweg des elastischen Koppelgliedes (35, 36) durch einen bei vorbestimmter Grenzbelastung eintretenden Formschluß (15, 37) begrenzt ist.

4. Drehelastische Kupplung nach den Ansprüchen 2 und 3,
dadurch gekennzeichnet,
daß, unter Bezug auf das Wirksamwerden als Funktion der in die Kupplung eingeleiteten Arbeit oder unter Bezug auf den Kraftleitungsweg durch die Kupplung, ein starres (13) und ein durch Formschluß (15, 37) in seinem Federweg begrenztes elastisches Koppelglied (35, 36) in Serie geschaltet sind.

5. Drehelastische Kupplung nach einem der Ansprüche 2 bis 4,
dadurch gekennzeichnet,
daß die Federkennlinie (3ß) des elastischen Koppelgliedes (35, 36) weicher, d.h. flacher als die Federkennlinie (40) des federnden Zwischengliedes (18) verläuft.

6. Drehelastische Kupplung nach einem der Ansprüche 1 bis 5,
dadurch gekennzeichnet,
daß mindestens eines der federnden Zwischenglieder (18) zwischen dem Auflagerblech (17) und der Abstützung (19) an der ersten Kupplungshälfte (1) unter Kompressionsvorspannung eingespannt ist.

7. Drehelastische Kupplung nach einem der Ansprüche 1 bis 6,
dadurch gekennzeichnet,
daß mindestens eines der Koppelglieder ein begrenzt zugelastisches Zugglied ist.

## Claims

1. Resilient torsional coupling, in which two mutually rotatable coupling halves (1,2) are connected with one another so as to transmit force by means of at least one resilient intermediate member (18) and, in series with this resilient intermediate member in terms of the force transmission path through the coupling, by means of at least one movement converting intermediate member (11) converting a rotation into a translational movement or, vice versa, a translational movement into a rotation, and in which at least one sheet metal support (17) is provided which is in contact at a radially outward position with at least one resilient intermediate member (18) which is connected in frictional support at a radially inward position to a first of the two coupling halves (1) and to which the movement converting intermediate member (11) is linked in a translatory fashion directly or over at least one coupling member (13) in such a way that the sheet metal support (17) in the event of a relative rotation, relative to the first coupling half, of the other coupling half which is rotationally solidly connected with the movement converting intermediate member (11), is subjected to an at least substantially radial force which strains or relieves the resilient intermediate link (18),
characterized in that
the movement converting intermediate member is an eccentric disk (11) and that at least one of the coupling members is a solid connecting rod (13).

2. Resilient torsional coupling according to claim 1,
characterized in that
at least one of the coupling members (35, 36) is elastic.

3. Resilient torsional coupling according to claim 2,

characterized in that
the sprung path of the elastic coupling member (35, 36) is limited by a positive stop (15, 35) which comes into action at a pre-determined boundary load.

4. Resilient torsional coupling according to claims 2 and 3,
characterized in that
a solid (13) and an elastic coupling member (35, 36) limited in its sprung path by a positive stop (15, 37) are connected in series in terms of becoming effective as a function of the work introduced into the coupling or in terms of the force transmission path through the coupling.

5. Resilient torsional coupling according to one of the
claims 2 to 4,
characterized in that
the spring characteristic (38) of the elastic coupling member (35, 36) is softer, i.e. flatter than this spring characteristic (40) of the resilient intermediate member (18).

6. Resilient torsional coupling according to one of the claims 1 to 5,
characterized in that
at least one of the resilient intermediate members (18) between the sheet metal support (17) and support point (19) on the first coupling half (1) is pre-stressed in compression.

7. Resilient torsional coupling according to one of the claims 1 to 6,
characterized in that
at least one of the coupling members is a bendable tension member being limitedly solid in tension.

## Revendications

1. Accouplement élastique à rotation dans lequel deux moitiés d'accouplement (1, 2), pouvant tourner l'une par rapport à l'autre, sont reliées l'une à l'autre, de manière à transmettre les efforts par au moins un organe intermédiaire élastique (18) et par au moins un organe intermédiaire (11) de transformation de mouvements, monté en série, par rapport au trajet de transmission des efforts à travers l'accouplement, avec l'organe intermédiaire élastique et transformant une rotation en une translation, ou, inversement, une translation en une rotation, et dans lequel est prévue au moins une tôle de support (17) qui s'appuie à l'extérieur, dans le sens radial, sur au moins un organe intermédiaire élastique (18), qui s'appuie à l'intérieur dans le sens radial avec serrage et est relié à l'une (1) des deux moitiés d'accouplement, et sur lequel l'organe intermédiaire (11) de transformation des mouvements s'appuie directement ou par l'intermédiaire d'un organe d'accouplement (13) au moins, dans une translation, de telle manière que lors d'un déplacement par rotation relatif entre la première moitié d'accouplement et l'autre moitié d'accouplement qui est reliée, sans pouvoir tourner par rapport à lui, à l'organe intermédiaire (11) de tranaformation des mouvements, la tôle de support (17) est soumise à une action dirigée essentiellement dans le sens radial, de manière à serrer ou à desserrer l'organe intermédiaire élastique (18), caractérisé en ce que l'organe intermédiaire de transformation des mouvements est un disque à excentrique (11), et que l'un au moins des organes d'accouplement est une bielle rigide (13).

2. Accouplement elastique à rotation selon la revendication 1, caractérisé en ce que l'un au moins des organes d'accouplement (35, 36) eat élastique.

3. Accouplement élastique à rotation selon la revendication 2, caractérisé en ce que le déplacement élastique de l'organe d'accouplement élastique (35, 36) est limité par un contact de parties de formes adaptéea (15, 37) qui se produit pour une charge limite déterminée.

4. Accouplement élastique à rotation selon les revendications 2 et 3, caractérisé en ce que, par rapport au mode d'action du travail fourni à l'accouplement ou par rapport au trajet de transmission des efforts dans l'accouplement, un organe d'accouplement rigide (13) et un organe d'accouplement élastique (35, 36), limité dans son déplacement élastique par un contact de parties de formes adaptées (15, 17), sont montés en serie.

5. Accouplement élastique à rotation selon l'une des revendications 2 à 4, caractérisé en ce que la caractéristique d'élasticité (38)de l'organe d'accouplement élastique (35, 36) est plus douce, c'est-à-dire plus plate, que la caractéristique d'élasticité (40) de l'organe intermédiaire élastique (18).

6. Accouplement élastique à rotation selon l'une des revendications 1 à 5, caractérisé en ce que l'un au moins des organes intermédiaires elastiques (18) est serré, avec précontrainte de compression, entre la tôle de support (17) et la zone d'appui (19), contre la première moitié d'accouplement (1).

7. Accouplement élastique à rotation selon l'une des revendications à 6, caractérisé en ce que l'un au moins des organes d'accouplement est un organe de traction ayant une élasticité à la traction limitée.

FIG.2

FIG.1

FIG. 3

FIG. 4